**Europäisches Patentamt**

**European Patent Office**

**Office européen des brevets**

(19)

(11)  **EP 1 147 307 B1**

(12)  **EUROPÄISCHE PATENTSCHRIFT**

(45) Veröffentlichungstag und Bekanntmachung des Hinweises auf die Patenterteilung:
**17.09.2003  Patentblatt 2003/38**

(51) Int Cl.⁷: **F02M 51/06**, H01L 41/04

(21) Anmeldenummer: **99964498.2**

(86) Internationale Anmeldenummer:
**PCT/EP99/09014**

(22) Anmeldetag: **23.11.1999**

(87) Internationale Veröffentlichungsnummer:
**WO 00/045046 (03.08.2000 Gazette 2000/31)**

(54) **VORRICHTUNG ZUR STEUERUNG EINES PIEZOELEMENT-EINSPRITZVENTILS**

DEVICE FOR CONTROLLING A PIEZO ELEMENT INJECTION VALVE

DISPOSITIF POUR COMMANDER UNE SOUPAPE D'INJECTION A ELEMENT PIEZO

(84) Benannte Vertragsstaaten:
**FR GB IT**

(30) Priorität: **29.01.1999  DE 19903555**

(43) Veröffentlichungstag der Anmeldung:
**24.10.2001  Patentblatt 2001/43**

(73) Patentinhaber: **DaimlerChrysler AG**
**70567 Stuttgart (DE)**

(72) Erfinder:
• **KLENK, Rolf**
**D-70327 Stuttgart (DE)**
• **RÖSSLER, Klaus**
**D-73776 Altbach (DE)**
• **STEFANI, Alexander**
**D-71336 Bittenfeld (DE)**
• **VENT, Guido**
**D-71570 Oppenweiler (DE)**

(56) Entgegenhaltungen:
EP-A- 0 790 402          DE-A- 19 714 610
DE-A- 19 814 594         US-A- 4 529 164
US-A- 4 644 212

**Beschreibung**

Die Erfindung betrifft eine Vorrichtung zur Ansteuerung eines über einen Piezo-Aktor betätigbaren Einspritzventils, insbesondere für einen Ottomotor mit innerer Gemischbildung, nach dem Oberbegriff des Anspruchs 1.

Bei Brennkraftmaschinen mit Direkteinspritzung kann durch definiertes Ansteuern von Einspritzventilen während des Einspritzvorgangs eine Optimierung von Kraftstoffverbrauch und Schadstoffemission erzielt werden, indem über den Öffnungshub der Einspritzventile die Einspritzstrahlcharakteristik, wie beispielsweise der Strahlöffnungswinkel, die Strahldicke, die Strahlrichtung und insbesondere auch der Zerstäubungsgrad, definiert eingestellt werden. Zum Antrieb von Einspritzventilen mit einstellbarem Öffnungshub eignen sich insbesondere Piezo-Aktoren, die es ermöglichen, ein elektrisches Signal praktisch verzögerungsfrei in eine mechanische Bewegung zu wandeln. Diese Bewegung ist hinsichtlich Auslenkung und zeitlichem Verlauf durch Einstellen einer Hochspannung, mit welcher der Piezo-Aktor beaufschlagt wird, präzise steuerbar. Damit lassen sich praktisch beliebig gestaltete Einspritzungen erzielen, z.B. solche mit kontinuierlich zwischen zwei verschiedenen Öffnungsstellungen abnehmendem Öffnungshub, wie in der DE 196 42 653 C1 offenbart.

Ein insbesondere auch für den Einsatz in Brennkraftmaschinen mit Common-Rail-Einspritzsystem geeignetes Einspritzventil mit Piezo-Aktor ist beispielsweise in der DE 195 48 526 A1 und in dem Zeitschriftenaufsatz M.Rumphorst, "Ein neues elektronisches Hochdruck-Einspritzsystem für Dieselmotoren", MTZ Motortechnische Zeitschrift 56 (1995) 3, Seite 142 beschrieben. Während im System der DE 195 48 526 A1 beim Anlegen der Piezospannung das Ventil öffnet, führt das Anlegen von Spannung im System der letztgenannten Druckschrift zum Schließen des Ventils. Dabei kann der Entladevorgang des Piezo-Aktors auf unterschiedliche Spannungsniveaus erfolgen, um auf diese Weise unterschiedliche Öffnungsstellungen des Ventils zu erhalten. Der Entladevorgang erfolgt vorzugsweise mit einem konstanten Entladestrom.

Eine Vorrichtung zur Ansteuerung eines über einen Piezo-Aktor betätigbaren Einspritzventils entsprechend der eingangs genannten Art ist in der US 5 130 598 offenbart. Dort wird, um einen Piezo-Aktor steuerbar mit einer Hochspannungsquelle zu verbinden bzw. diese davon abzukoppeln, mittels eines Komparators die am Piezo-Aktor anliegende Spannung mit einer die gewünschte Piezospannung repräsentierenden Referenzspannung verglichen. Das Komparator-Ausgangssignal dient zusammen mit dem Ausgangssignal einer Motorbetriebsparameter berücksichtigenden elektronischen Steuereinrichtung zum Ansteuern einer Torschaltung im Leistungspfad der Hochspannungsversorgung für den Piezo-Aktor. Die Auflademittel stellen eine vorzugsweise der maximal gewünschten Piezospannung entsprechende Hochspannung zur Verfügung, während das Entladepotential der Entlademittel vorzugsweise auf Nullpotential liegt.

Aus der EP 0 460 660 A2 ist eine weitere Vorrichtung zum Ansteuern eines Piezoantriebs für ein Einspritzventil bekannt, bei der das Einspritzventil durch Anlegen einer Hochspannung geschlossen wird. Durch das zeitüberwachte Entladen des Piezo-Aktors auf ein Referenzspannungspotential kann die Piezo-Spannung und damit der Ventilöffnungshub in einem bestimmten Bereich kontinuierlich eingestellt werden.

In der Offenlegungsschrift DE 197 14 610 A1 ist eine Vorrichtung zur Ansteuerung eines über einen Piezo-Aktor, der aus mehreren piezoelektrischen Elementen besteht, betätigbaren Einspritzventils mit Auf- und Entlademitteln zum gesteuerten Aufladen und Entladen des Piezo-Aktors auf eine jeweils gewünschte Piezo-Spannung offenbart. Die Vorrichtung umfasst eine Spannungsversorgung, welche eine Batterie und einen an diese angekoppelten Gleichspannungswandler beinhaltet. Der Gleichspannungswandler stellt eine einzige Versorgungsspannung zwischen zwei entsprechenden Spannungsausgangspolen bereit. Das Laden und Entladen des Piezo-Aktors erfolgt jeweils zumindest teilweise durch Ladungstransfer zwischen einem zu ladenden oder entladenden piezoelektrischen Element und einem oder mehreren nicht zu ladenden oder entladenden piezoelektrischen Elementen. Dabei kann Energie in einem Induktanzelement zwischengespeichert werden.

Die Patentschrift US 4.529.164 offenbart eine gattungsgemäße Vorrichtung, bei der als Spannungsversorgung für den Piezo-Aktor eine elektronische Steuereinheit fungiert, an welche der Piezo-Aktor über eine einzelne Anschlussleitung angeschlossen ist. Die elektronische Steuereinheit legt jeweils den Spannungspegel fest, mit dem der Piezo-Aktor zu beaufschlagen ist und legt diese dann über die Anschlussleitung an den Piezo-Aktor an.

Aufgabe der Erfindung ist es, eine Vorrichtung zur Ansteuerung eines über einen Piezo-Aktor betätigbaren Einspritzventils zu schaffen, welche die Realisierung spezieller Ansteuerungsarten mit relativ geringem Aufwand und hoher Zuverlässigkeit ermöglicht.

Diese Aufgabe wird durch eine Vorrichtung mit den Merkmalen des Anspruchs 1 gelöst.

Bei der erfindungsgemäßen Vorrichtung stellt in einem ersten Aspekt die Spannungsversorgung mindestens drei unterschiedliche Spannungspegel an entsprechenden Anschlüssen bereit, zwischen denen zur Einstellung verschiedener Ventilöffnungsstellungen direkt umgeschaltet werden kann, so dass mehrere benötigte Ventilstellungen ohne zusätzlichen Steuerungsaufwand zuverlässig eingestellt werden können.

In einem weiteren Aspekt ist ein zeitgesteuertes Anlegen von Auflade- oder Entladespannungspegeln an den Piezo-Aktor vorgesehen, wofür nur eine Spannungsquelle benötigt wird und womit beliebige Ventilhubverläufe realisierbar sind.

Dabei wird der Aufladespannungspegel größer als die maximal gewünschte Piezospannung und/oder der Entladespannungspegel kleiner als die minimal gewünschte Piezospannung gewählt.

Auf diese Weise wird ein schnelles Aufladen bzw. Entladen bis auf einen maximalen bzw. minimalen gewünschten Piezospannungspegel ermöglicht.

In Weiterbildung der Erfindung nach Anspruch 2 gestatten die zeitgesteuerten Schaltmittel ein Invertieren der am Piezo-Aktor anliegenden Potentialdifferenz. Auf diese Weise wird der Einsatz einer Spannungsquelle ermöglicht, die lediglich zwei verschiedene Spannungen bereitstellt.

In Weiterbildung der Erfindung nach Anspruch 3 weisen die Auf- und Entlademittel Stromsteuermittel zum jeweiligen Einstellen eines konstanten Auf- oder Entladestromes auf, wobei der Wert des gesteuerten, konstanten Aufladestromes gleich dem Wert des maximalen ungesteuerten Aufladestromes beim maximalen Piezospannungspegel gewählt wird. Auf diese Weise wird ein schonendes Aufladen des Piezoelementes ermöglicht.

In Ausgestaltung der Erfindung nach Anspruch 4 weisen die Auf- und Entlademittel Überwachungsmittel zur Überwachung der am Piezo-Aktor anliegenden Spannung und/oder der Nulllage des Piezo-Aktors und Zeiteinstellmittel auf, welche die Steuerzeiten für die zeitgesteuerten Schaltmittel in Abhängigkeit von der Überwachungsinformation der Überwachungsmittel festlegen. Dies erlaubt eine adaptive Anpassung der Spannungspegel beispielsweise in Abhängigkeit von Streuungen in den Eigenschaften verschiedener Einspritzventile und von Ventilalterungserscheinungen.

Vorteilhafte Ausführungsbeispiele der Erfindung sind in den Zeichnungen dargestellt und werden nachfolgend beschrieben.

Es zeigen:

Fig. 1 ein Blockdiagramm einer Vorrichtung zur Ansteuerung eines über einen Piezo-Aktor betätigbaren Einspritzventils,

Fig. 2 ein Piezospannungs-Zeit-Diagramm zur Erläuterung des Betriebs der Vorrichtung von Fig. 1,

Fig. 3 ein Blockdiagramm einer weiteren Vorrichtung zur Ansteuerung eines über einen Piezo-Aktor betätigbaren Einspritzventils,

Fig. 4 ein Piezospannungs-Zeit-Diagramm zur Erläuterung des Betriebs der Vorrichtung von Fig. 3,

Fig. 5 ein Blockdiagramm einer weiteren Vorrichtung zur Ansteuerung eines über einen Piezo-Aktor betätigbaren Einspritzventils,

Fig. 6 ein Piezospannungs-Zeit-Diagramm zur Erläuterung des Betriebs der Vorrichtung von Fig. 5,

Fig. 7 ein Blockdiagramm einer weiteren Vorrichtung zur Ansteuerung eines über einen Piezo-Aktor betätigbaren Einspritzventils und

Fig. 8 ein Piezospannungs-Zeit-Diagramm zur Erläuterung des Betriebs der Vorrichtung von Fig. 7.

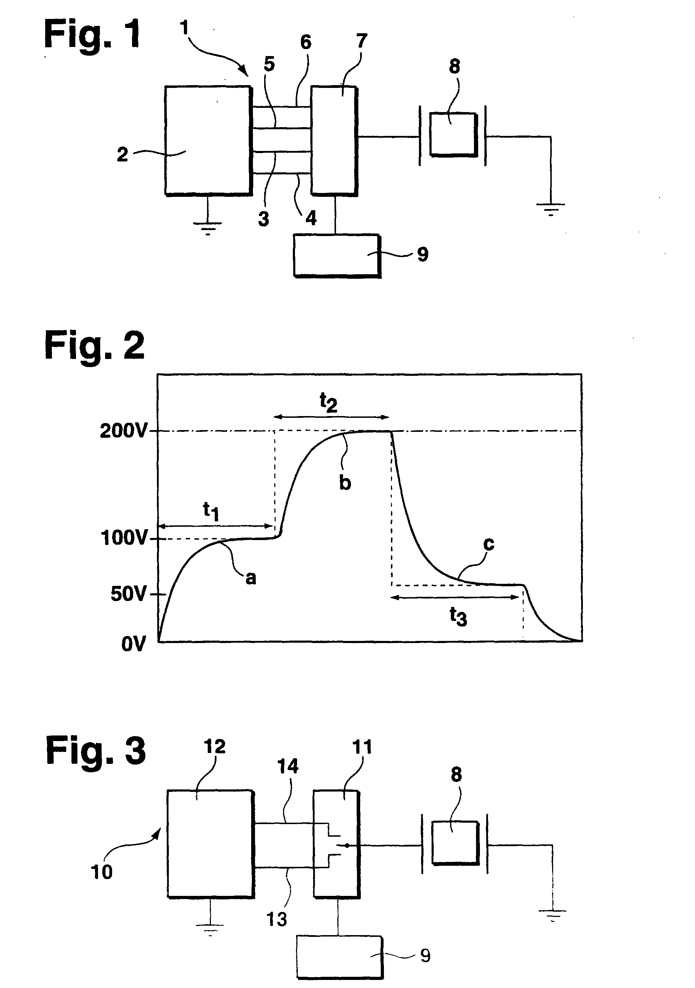

Die in Fig. 1 dargestellte Vorrichtung 1 zur Ansteuerung eines über einen Piezo-Aktor 8 betätigbaren Einspritzventils beinhaltet eine Hochspannungsquelle 2, die an Anschlüssen 3 bis 6 vier verschiedene Spannungspegel bereitstellt, und zwar 0V an Anschluß 3, also Masse, 50V an Anschluß 4, 100V an Anschluß 5 und 200V an Anschluß 6. Über eine Umschaltsteuereinheit 7 sind die Anschlüsse 3 bis 6 mit dem Piezo-Aktor 8 verbunden, der einem nicht gezeigten Einspritzventil zugeordnet ist. Die Umschaltsteuereinheit 7 ist über eine Signalleitung mit einer Motorsteuerung 9 verbunden, die der Umschaltsteuereinheit 7 die Information zuführt, für welche Zeitdauer mittels des Piezo-Aktors 8 am Einspritzventil eine bestimmte Öffnungsstellung angestrebt werden soll. Aufgrund des Steuersignals der Motorsteuerung stellt dann die Umschaltsteuereinheit 7 eine Verbindung des Piezo-Aktors 8 mit einem der Anschlüsse 3 bis 6 der Hochspannungsquelle 2 her. Mehrere Einspritzventile einer Mehrzylinder-Brennkraftmaschine können über je eine Umschaltsteuereinheit an die Anschlüsse 3 bis 6 der Hochspannungsquelle 2 angeschlossen werden.

Fig. 2 erläutert den zeitlichen Verlauf eines beispielhaften Einspritzvorganges eines mittels des Piezo-Aktors 8 angetriebenen Einspritzventiles, der im wesentlichen mit drei unterschiedlichen Ventilhüben durchgeführt wird. In Fig. 2 ist ein gewünschter, idealer Verlauf der Spannung am Piezo-Aktor 8 gepunktet gezeichnet und der technisch realisierte, reale Spannungsverlauf am Piezo-Aktor 8 als Funktion der Zeit mit der durchgezogenen Linie dargestellt. Liegt am Piezo-Aktor 8 eine Spannung von 0V an, befindet sich das Einspritzventil in seiner Schließstellung. Aufgrund eines Signales von der Motorsteuerung 9 legt die Umschaltsteuereinheit 7 an den Piezo-Aktor 8 für eine Zeit $t_1$ einen Spannungspegel von zunächst +100V an, was einer mittleren Öffnungsstellung a des Einspritzventiles entspricht, um eine Voreinspritzung von Kraftstoff in eine Zylinderkammer des Motors vorzunehmen. Der Piezo-Aktor 8 lädt sich dadurch entlang einer exponentiell verlaufenden Ladekurve auf. Nach Ablauf der Zeit $t_1$ erfolgt, ausgelöst durch die Motorsteuerung 9, eine Verbindung des Piezo-Aktors 9 mit dem Anschluß 6 der Hochspannungsquelle 2, der auf +200V liegt. Darauf lädt sich der Piezo-Aktor 8 weiter auf, und das Einspritzventil öffnet sich für ein Zeitintervall $t_2$ mit einem Haupteinspritzhub auf eine Haupteinspritzstellung b, in der eine Einspritzung mit maximalem Kraftstoffdurchsatz erfolgt. Um darauffolgend für ein Zeitintervall $t_3$ eine Abschlußeinspritzstellung c anzustreben, bewirkt die Motorsteuerung 9 ein Anlegen des Spannungspegels 4 von 50V durch die Umschaltsteuereinheit 7 an den Piezo-Aktor 8. Die Folge ist ein exponentielles Abfallen der Spannung am Piezo-Aktor 8. Durch Anlegen des Spannungspegels "0V" von Anschluß 3 wird dann das Einspritzventil geschlossen und damit der Einspritzvorgang beendet, worauf eine Zündung des Kraftstoffgemisches im zugehörigen Zylinderraum der Brennkraftmaschine erfolgt. Das Einspritzventil verbleibt dann so lange in einem Schließzustand, bis die Motorsteuerung 9 für einen neuen Arbeitszyklus durch Ansteuern der Umschalt-Steuereinheit 7 einen neuerlichen Einspritzvorgang auslöst.

In Fig. 3 ist eine weitere Vorrichtung zur Ansteuerung eines über einen Piezo-Aktor 8 betätigbaren Einspritzventils dargestellt. Diese weist eine zeitgesteuerte Umschalt-Steuereinheit 11 auf, welche mit einer Hochspannungsquelle 12 verbunden ist, die im Unterschied zum Beispiel von Fig. 1 lediglich an zwei Anschlüssen 13, 14 eine Spannung von -120V bzw. +320V bereitstellt. Wie im Beispiel von Fig. 1 ist eine Motorsteuereinheit 9 vorgesehen, die der Umschaltsteuereinheit 11 über eine Signalleitung die Information bereitstellt, für welche Zeitdauer für das Einspritzventil eine bestimmte Öffnungsstellung angestrebt werden soll. Die Spannung am Piezo-Aktor 8 wird eingestellt, indem an diesen mittels der Umschaltsteuereinheit 11 der Auflade-Spannungspegel von Anschluß 14 oder der Entlade-Spannungspegel 13 der Hochspannungsquelle 12 zeitüberwacht für genau die Zeit angelegt wird, die für die angestrebte Öffnungsstellung des Einspritzventils erforderlich ist. Dazu ordnet die Umschaltsteuereinheit 11 der ihr eingegebenen, anzustrebenden Spannung am Piezo-Aktor 8 anhand von in ihr abgelegten Lade- und Entladekurven eine Zeitdauer zu, für die sie eine Verbindung des Piezo-Aktors 8 mit einem der Anschlüsse 13 oder 14 der Hochspannungsquelle 12 herstellt. Anstatt in der Umschalt-Steuereinheit 11 passende Lade- und Entladekurven abzulegen, ist es auch möglich, die für die gewünschte Spannung am Piezo-Aktor 8 erforderliche Lade- bzw. Entladezeit aktuell anhand der jeweils vorliegenden Anfangsbedingungen zu berechnen.

Um für unterschiedliche Öffnungsstellungen des Einspritzventils ein näherungsweise zeitlich lineares Aufladen des Piezo-Aktors 8 auf die jeweils erforderliche Spannung zu erzielen, ist die positive Klemmenspannung am Anschluß 14 der Hochspannunsquelle 12 mit +320V deutlich höher als die maximal erforderliche Spannung von +200V am Piezo-Aktor 8 ausgelegt. Ein entsprechendes zeitlich lineares Entladen des Piezo-Aktors 8 wird erzielt, indem die negative Entladespannung von -120V deutlich unterhalb der minimalen Spannung am Piezo-Aktor 8 von 0V liegt. Die im vorliegenden Beispiel um den Faktor 1,57 gegenüber der maximalen Piezospannung höhere Ladespannung hat zudem zur Folge, daß die jeweilige Aufladung spätestens nach einer der Zeitkonstante des exponentiellen Ladekurvenverlaufs entsprechenden Ladezeit beendet ist. Analoges gilt für das Entladen.

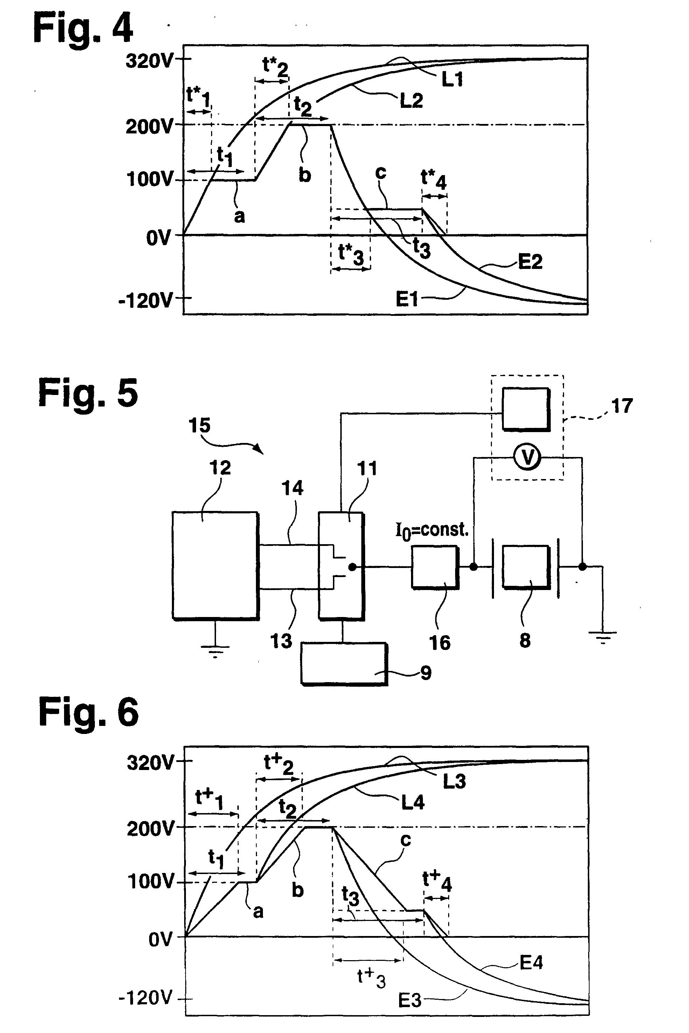

Fig. 4 erläutert den zeitlichen Verlauf der Spannung am Piezo-Aktor 8 während eines Einspritzvorganges, der mit der Vorrichtung von Fig. 3 gesteuert wird. Wie bei dem in Fig. 2 erläuterten Vorgang werden von einem Einspritzventil, dem der Piezo-Aktor 8 zugeordnet ist, beispielhaft drei Ventilöffnungsstellungen a, b und c eingestellt. Die durchgezogene Linie ist die Spannung am Piezo-Aktor 8 als Funktion der Zeit. Gestrichelt ist der zugehörige ideale Spannungsverlauf für den Piezo-Aktor 8 dargestellt. Eine strichpunktierte Linie kennzeichnet wie in Fig. 2 ein höchstes Spannungsniveau für den Piezo-Aktor 8, und je zwei weitere Kurven L1, L2 bzw. E1, E2 verdeutlichen den zeitlichen Verlauf von exponentiell verlaufenden Lade- bzw. Entladekurven, wie sie sich für den Piezo-Aktor 8 ergeben, solange dieser mit dem Lade- bzw. Entladeanschluß 13, 14 verbunden ist.

Um das Einspritzventil aus einer Schließstellung in eine Öffnungsstellung a zu überführen, wird mittels der Umschaltsteuereinrichtung 11 der Spannungspegel von +320V für die in der Fig. 4 eingezeichnete Zeitdauer $t_1^*$ angelegt. Der Piezo-Aktor 8 lädt sich gemäß der Ladekurve L1 auf und bewirkt ein entsprechendes Anwachsen des Ventilhubes des Einspritzventiles. Nach der Zeitdauer $t_1^*$ ist die Spannung am Piezo-Aktor 8 auf 100V angestiegen, und der Ladevorgang wird zeitgesteuert abgebrochen, um die Piezospannung anschließend für eine gewünschte Zeitdauer $t_1 - t_1^*$ auf diesem Wert zu halten. Zur Bewegung des Einspritzventils in eine Haupteinspritzstellung b wird erneut der Spannungspegel von +320V angelegt, und zwar für eine Zeitdauer $t_2^*$, die erforderlich ist, um die Spannung am Piezo-Aktor 8 gemäß der Ladekurve L2 auf 200V ansteigen zu lassen, wonach sie dort für eine gewünschte Zeitdauer $t_2 - t_2^*$ gehalten wird. Durch Anlegen des negativen Spannungspegels von -120V am Anschluß 13 der Hochspannungsquelle 12 für eine Zeitdauer $t_3^*$ wird gemäß der Entladekurve E1 eine reduzierte Ventilöffnung eingestellt, die solange für eine Zeitdauer $t_3 - t_3^*$ aufrechterhalten wird, bis die Motorsteuerung 9 der Umschaltsteuereinheit 11 signalisiert, daß mittels des Piezo-Aktors 8 das Einspritzventil in eine Schließstellung zu überführen ist. Diese wird daraufhin durch Anlegen des Spannungspegels von -120V für eine Zeitdauer $t_4^*$ gemäß der Entladekurve E2 bewirkt. Damit ist der Einspritzzyklus beendet und beginnt dann von der Motorsteuerung 9 entsprechend gesteuert wieder von neuem.

Fig. 5 zeigt eine Vorrichtung 15 zur Ansteuerung eines Piezoelement-Einspritzventiles als weiteres Ausführungsbeispiel. Wie im Beispiel von Fig. 3 ist zum Aufladen eines Piezo-Aktors 8 eine Hochspannungsquelle 12 vorgesehen, die an Anschlüssen 13, 14 eine Spannung von minus -120V bzw. +320V bereitstellt. Wiederum ist der Piezo-Aktor 8 mit der Hochspannungsquelle 12 durch eine Umschaltsteuereinheit 11 verbunden; im Unterschied zum Ausführungsbeispiel von Fig. 3 ist jedoch im Leitungspfad zwischen der Umschaltsteuereinheit 11 und dem Piezo-Aktor 8 ein Konstantstromregler 16 angeordnet, der bewirkt, daß zu bzw. vom Piezo-Aktor 8 immer ein zeitlich konstanter Ladestrom $I_0$ fließt, was ein zeitlich lineares Auf- bzw. Entladen desselben bewirkt. Ferner ist in der Vorrichtung 15 eine Spannungsüberwachungseinheit 17 mit A/D-Wandler für den Piezo-Aktor 8 vorgesehen, der die wie im Beispiel von Fig. 3 mittels der Umschaltsteuereinheit 11 zeitgesteuert eingestellte Spannung am Piezo-Aktor 8 überwacht und der Umschaltsteuereinheit 11 ein Korrektursignal bereitstellt. Die Spannungsüberwachungseinheit 17 gestattet eine Korrektur der Lade- und Entladezeitberechnung, die bei Schwankungen der Betriebsparameter des Einspritzventils, wie der Kapazität des Piezo-Aktors 8, etwa aufgrund von Alterung oder von Parameterstreuungen zwischen verschiedenen Ventilen ungenau werden kann.

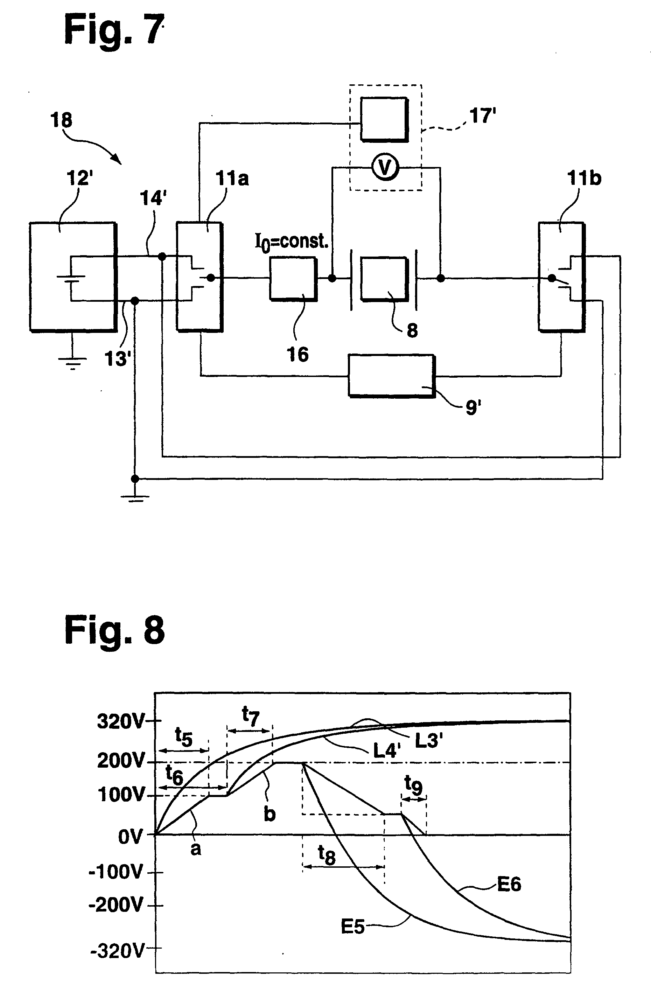

Fig. 6 erläutert den zeitlichen Verlauf der Spannung am Piezo-Aktor 8, um den Hub eines Einspritzventils in einem Einspritzvorgang wiederum zwischen einer Schließstellung, einer mittleren Öffnungsstellung a, in der eine Voreinspritzung vorgenommen wird, einer Haupteinspritzstellung b, in der das Einspritzventil mit Haupteinspritzhub geöffnet ist, und einer Abschlußeinspritzstellung c zu steuern.

Fig. 6 zeigt mit der durchgezogen dargestellten Kennlinie die Spannung am Piezo-Aktor 8 und gepunktet einen idealen Spannungsverlauf. Eine strichpunktierte Linie kennzeichnet, wie bei Fig. 2 und Fig. 4, ein höchstes Spannungsniveau für den Piezo-Aktor 8. Weiter verdeutlichen je zwei Lade- und Entladekurven L3, L4 bzw. E3, E4 den zeitlichen Verlauf der Lade- bzw. Entladespannung ohne Konstantstromregelung. Um das Einspritzventil in die mittlere Öffnungsstellung a zu bewegen, wird der Piezo-Aktor 8 zeitgesteuert für ein Zeitintervall der Länge $t_1^+$ mit konstantem Ladestrom aufgeladen, wobei das Aufladen über den Anschluß 14 der Hochspannungsquelle 12 erfolgt, an dem eine positive Hochspannung bereitgestellt wird. Nach Ablauf der Zeitdauer $t_1$ befiehlt die Motorsteuerung 9 der Umschaltsteuereinheit 11 das Einstellen der Haupteinspritzstellung b des Einspritzventiles, worauf der Piezo-Aktor 8 erneut bei konstantem Ladestrom für die Zeitdauer $t_2^+$ auf die erforderliche Spannung geladen wird. Sobald die Spannung erreicht ist, wird wie im Abschnitt a der Ladevorgang abgebrochen. Entsprechend erfolgt ein Entladen des Piezo-Aktors 8 für das Ansteuern der Abschlußeinspritzstellung c, wobei der Entladestrom zum Anschluß 13 der Hochspannungsquelle 12 fließt, an dem eine negative Spannung von -120V anliegt. Nach Ablauf des Zeitintervalls $t_3$ signalisiert die Motorsteuerung 9 der Umschaltsteuereinheit 11, daß das Einspritzventil in eine Schließstellung zu überführen ist, und die Umschaltsteuereinheit 11 veranlaßt daraufhin ein Entladen des Piezo-Aktors 8 bei konstantem Entladestrom. Wiederum wird dazu der Piezo-Aktor 8 mit dem negativen Potential des Anschlusses 13 der Hochspannungsquelle 12 für ein Zeitintervall $t_4^+$ verbunden. Damit ist der Einspritzzyklus beendet und beginnt dann entsprechend von der Motorsteuerung 9 gesteuert wieder von neuem. Die konstante Ladestromstärke $I_0$ ist zur Erzielung kurzer Reaktionszeiten möglichst groß gewählt. Vorzugsweise entspricht sie der maximalen Ladestromstärke bei der maximalen Piezospannung im Fall eines ungesteuerten Ladevorgangs, d.h. der sich für die Ladekurve L3 bei der maximalen Piezospannung von +220V ergebenden Ladestromstärke. Die Entladestromstärke wird vorzugsweise ebenso groß gewählt.

Fig. 7 zeigt eine Vorrichtung 18 zur Ansteuerung eines Piezoelement-Einspritzventiles unter Verwendung einer Vollbrücken-Schaltanordnung als weiteres Ausführungsbeispiel. Zum Aufladen des Piezo-Aktors 8 ist in diesem Fall eine Hochspannungsquelle 12' vorgesehen, die einschließlich Masse nur zwei Versorgungsspannungen an zugehörigen Anschlüssen 13', 14' bereitstellt, und zwar Spannungen von 0V und +320V. Der Piezo-Aktor 8 ist mit der Hochspannungsquelle 12' über eine Vollbrücke aus zwei Schalteinheiten 11a, 11b verbunden. Im Leitungspfad zwischen der einen Schalteinheit 11a und dem Piezo-Aktor 8 ist ein Konstantstromregler 16 angeordnet, der bewirkt, daß zu bzw. vom Piezo-Aktor 8 ein zeitlich konstanter Lade- bzw. Entladestrom $I_0$ fließt, was ein zeitlich lineares Auf- bzw. Entladen desselben bewirkt. Ferner ist eine Spannungsüberwachungseinheit 17' mit A/D-Wandler für den Piezo-Aktor 8 vorgesehen, der die eingestellte Spannung am Piezo-Aktor 8 überwacht. Die Spannungsüberwachungseinheit 17' gestattet wiederum eine Korrektur der Lade- und Entladezeitberechnung, die bei Schwankungen der Betriebsparameter des Einspritzventils, wie der Kapazität des Piezo-Aktors 8, etwa aufgrund von Alterung oder von Parameterstreuungen zwischen verschiedenen Ventilen ungenau werden kann.

Fig. 8 erläutert den Betrieb der Vorrichtung von Fig. 7 anhand des zeitlichen Verlaufs der Spannung am Piezo-Aktor 8, um den Hub eines Einspritzventils in einem Einspritzvorgang wiederum zwischen einer Schließstellung, einer mittleren Öffnungsstellung a, in der eine Voreinspritzung vorgenommen wird, einer Haupteinspritzstellung b, in der das Einspritzventil mit Haupteinspritzhub geöffnet ist, und einer Abschlußeinspritzstellung c zu steuern.

Fig. 8 zeigt mit der durchgezogen dargestellten Kennlinie die Spannung am Piezo-Aktor 8 und gepunktet einen idealen Spannungsverlauf. Eine strichpunktierte Linie kennzeichnet, wie bei den Fig. 2, 4 und 6, ein höchstes Spannungsniveau für den Piezo-Aktor 8. Weiter verdeutlichen je zwei Lade- und Entladekurven L3', L4' bzw. E5, E6 den zeitlichen Verlauf der Lade- bzw. Entladespannung ohne Konstantstromregelung. Um das Einspritzventil in die mittlere Öffnungsstellung a zu bewegen, wird der Piezo-Aktor 8 zeitgesteuert für ein Zeitintervall der Länge $t_5$ mit konstantem Ladestrom aufgeladen, wobei durch die Schalteinheit 11a ein Anschluß des Piezo-Aktors 8 mit dem Anschluß 14' der Hochspannungsquelle 12' verbunden wird, an dem die positive Hochspannung vom +320V bereitgestellt wird und der andere Anschluß des Piezo-Aktors 8 von der Schalteinheit 11b auf 0V gelegt wird. Nach Ablauf der Zeitdauer $t_6$ befiehlt die Motorsteuerung 9' den Schalteinheiten 11a, 11b das Einstellen der Haupteinspritzstellung b des Einspritzventiles, worauf der Piezo-Aktor 8 erneut bei konstantem Ladestrom für die Zeitdauer $t_7$ auf die erforderliche Spannung geladen wird. Sobald die Spannung erreicht ist, wird wie im Abschnitt a der Ladevorgang abgebrochen.

Zum Entladen des Piezo-Aktors 8 für das Ansteuern der Abschlußeinspritzstellung c, wird invers zum vorherigen Laden für eine bestimmte Zeitdauer $t_8$ der eine Anschluß des Piezo-Aktors 8 über die Schalteinheit 11b auf +320V gelegt und der andere Anschluß durch die Schalteinheit 11a mit Masse verbunden, so daß am Piezo-Aktor 8 im Vergleich zum Aufladevorgang eine umgekehrte Potentialdifferenz anliegt. Nach Ablauf des Zeitintervalls $t_8$ signalisiert die Motorsteuerung 9' den Schalteinheiten 11a, 11b, daß das Einspritzventil in eine Schließstellung zu überführen ist. Wiederum wird dazu ein Anschluß des Piezo-Aktors 8 über die Schalteinheit 11b auf 320V gelegt und der andere Anschluß für ein Zeitintervall $t_9$ mit Masse verbunden, so daß der Piezo-Aktor 8 mit konstantem Entladestrom vollends entladen wird. Der vollständige Entladungszustand des Piezo-Aktors 8 wird über eine Spannungsnulldurchgangerkennung von der Spannungsüberwachungseinheit 17' detektiert. Damit ist der Einspritzzyklus beendet und beginnt dann entsprechend von der Motorsteuerung 9' gesteuert wieder von neuem. Die konstante Ladestromstärke $I_0$ ist zur Erzielung kurzer Reaktionszeiten möglichst groß gewählt. Vorzugsweise entspricht sie der maximalen Ladestromstärke bei der maximalen Piezospannung im Fall eines ungesteuerten Ladevorgangs, d.h. der sich für die Ladekurve L3' bei der maximalen Piezospannung von +320V ergebenden Ladestromstärke. Die Entladestromstärke wird vorzugsweise ebenso groß gewählt.

Die Vorrichtung von Fig. 7 hat den Vorteil, daß sie einschließlich Masse mit zwei Ausgangsspannungen auskommt, wobei die Potentialdifferenz wahlweise in der einen oder anderen Richtung an den Piezo-Aktor angelegt wird. Durch die Konstantstromregelung werden trotz unsymmetrischer Lade- und Entladespannungen symmetrische Lade- und Entladevorgänge erzielt.

Die Spannungsüberwachungseinheiten 17, 17' in den in Fig. 5 bzw. Fig. 7 dargestellten Vorrichtungen ermöglichen einen zuverlässigen, wartungsfreien Betrieb des Einspritzventils auch über lange Zeiträume hinweg. Es versteht sich, daß eine entsprechende Spannungsüberwachungseinheit auch in der in Fig. 3 dargestellten Vorrichtung vorgesehen werden kann, wodurch auch hier eine Verbesserung der Langzeitstabilität der Ventilansteuerung erzielt wird.

Die drei Ausführungsbeispiele mit zeitgesteuerter Aufund Entladung des Piezo-Aktors benötigen nur einen ventilöffnenden Versorgungsspannungspegel, ermöglichen Aufund Entladevorgänge mit steilen An- und Abstiegsflanken und praktisch beliebige Ventilnadelhubverläufe. Mit der Konstantstromregelung wird ein besonders schonendes Aufund Entladen des Piezo-Aktors erreicht.

## Patentansprüche

1. Vorrichtung zur Ansteuerung eines über einen Piezo-Aktor (8) betätigbaren Einspritzventils, insbesondere für einen Ottomotor mit innerer Gemischbildung, mit

   - Auf- und Entlademitteln zum gesteuerten Aufladen und Entladen des Piezo-Aktors (8) auf eine jeweils gewünschte Piezospannung, die eine Spannungsversorgung (2) mit mindestens drei Spannungspegeln beinhalten, die unterschiedlichen Ventilöffnungsstellungen entsprechen,

   **dadurch gekennzeichnet, dass**

   - die Spannungsversorgung (2) je einen Anschluss für jeden der drei Spannungspegel aufweist und die Auf- und Entlademittel Schaltmittel (7) zum gesteuerten Umschalten zwischen den mehreren Anschlüssen für die mehreren Spannungspegel aufweisen und/oder
   - die Spannungsversorgung (12) einen Auflade- und einen Entladespannungspegel aufweist, von denen der Aufladespannungspegel größer als die maximal gewünschte Piezospannung und/oder der Entladespannungspegel kleiner als die minimal gewünschte Piezospannung ist, und die Auf- und Entlademittel zeitgesteuerte Schaltmittel (11, 11a, 11b) zum zeitgesteuerten wahlweisen Anlegen von Auflade- oder Entladespannungspegeln an den Piezo-Aktor (8) zur Einstellung der jeweils gewünschten Piezospannung aufweisen.

2. Vorrichtung gemäß Anspruch 1,
   **dadurch gekennzeichnet, dass**
   die zeitgesteuerten Schaltmittel eine Vollbrücken-Schaltanordnung (11a, 11b) aufweisen, welche einen ersten Anschluss des Piezo-Aktors (8) wahlweise mit dem ersten oder dem zweiten von zwei verschiedenen Spannungsausgängen (13', 14') der Spannungsversorgung (12') und den anderen Anschluss des Piezo-Aktors mit dem jeweils anderen Spannungsausgang der Spannungsversorgung verbinden.

3. Vorrichtung gemäß Anspruch 1 oder 2,
**dadurch gekennzeichnet, dass**
die Auf- und Entlademittel Stromsteuermittel (16) zum jeweiligen Einstellen einer konstanten Auf- und/oder Entladestromstärke aufweisen, wobei der konstante Stromstärkewert gleich dem maximalen ungesteuerten Aufladestromstärkewert beim maximal gewünschten Piezospannungswert gewählt ist.

4. Vorrichtung gemäß einem der Ansprüche 1 bis 3,
**dadurch gekennzeichnet, dass**
die Auf- und Entlademittel Überwachungsmittel (17) zur Überwachung der am Piezo-Aktor (8) anliegenden Spannung und/oder der Nulllage des Piezo-Aktors (8) und Zeiteinstellmittel aufweisen, welche die Steuerzeiten für die zeitgesteuerten Schaltmittel in Abhängigkeit von der Überwachungsinformation der Überwachungsmittel festlegen.

**Claims**

1. Device for controlling a fuel injection valve that can be actuated by a piezoelectric actuator (8), in particular for an Otto engine with internal air-fuel mixture formation, having

  - charging and discharging means for the controlled charging and discharging of the piezoelectric actuator (8) in each case to a desired piezoelectric voltage, the said means comprising a voltage supply (2) with at least three voltage levels which correspond to different valve opening positions,

  **characterised in that**

  - the voltage supply (2) has one terminal for each of the three voltage levels and the charging and discharging means comprise switching means (7) for controlled commutation between the several terminals for the several voltage levels, and/or
  - the voltage supply (12) comprises one charging and one discharging level, of which the charging voltage level is higher than the maximum desired piezoelectric voltage and/or the discharging voltage level is lower than the minimum desired piezoelectric voltage, and the charging and discharging means comprise time-controlled switching means (11, 11a, 11b) for the time-controlled selective application of charging or discharging voltage levels to the piezoelectric actuator (8) in order to establish the piezoelectric voltage desired in each case.

2. Device according to Claim 1,
**characterised in that**
the time-controlled switching means comprise a full-bridge switching arrangement (11a, 11b), which connect a first terminal of the piezoelectric actuator (8), as desired, to the first or the second of two different voltage outputs (13', 14') of the voltage supply (12') and the other terminal of the piezoelectric actuator to the respective other voltage output of the voltage supply.

3. Device according to Claims 1 or 2,
**characterised in that**
the charging and discharging means comprise current control means (16) for the establishment of a constant charging and/or discharging current, such that the constant current value is chosen to be equal to the maximum uncontrolled charging current value at the maximum desired piezoelectric voltage value.

4. Device according to any of Claims 1 to 3,
**characterised in that**
the charging and discharging means comprise monitoring means (17) for monitoring the voltage applied to the piezoelectric actuator (8) and/or the zero position of the piezoelectric actuator (8), and time-control means which establish the control times for the time-controlled switching means as a function of the monitoring information from the monitoring means.

**Revendications**

1. Dispositif pour commander une soupape d'injection actionnée par un actionneur piézoélectrique (8), notamment pour un moteur à essence avec formation intérieure du mélange, comportant

  - des moyens de charge et de décharge pour le chargement et le déchargement commandés de l'actionneur piézoélectrique (8) à une tension piézoélectrique respective désirée, qui incluent un dispositif d'alimentation en tension (2) comportant au moins trois niveaux de tension, qui correspondent à différentes positions d'ouverture de la soupape,

  **caractérisé en ce que**

  - l'alimentation en tension (2) possède une borne pour chacun des trois niveaux de tension et les moyens de charge et de décharge comportent des moyens de commutation (7) pour réaliser une commutation commandée entre plusieurs bornes pour la pluralité de niveaux de tension, et/ou

- l'alimentation en tension (2) possède un niveau de tension de charge et de décharge, parmi lesquels le niveau de tension de charge est supérieur à la tension piézoélectrique maximale désirée et/ou le niveau de tension de décharge est inférieur à la tension piézoélectrique minimale désirée, et les moyens de charge et de décharge comportent des moyens de commutation (11, 11a, 11b), commandés dans le temps pour l'application au choix, de niveaux de tension de charge ou de décharge à l'actionneur piézoélectrique (8) pour le réglage de la tension piézoélectrique respectivement désirée.

2. Dispositif selon la revendication 1, **caractérisé en ce que** les moyens de commutation commandés dans le temps comportent un dispositif à commutation en pont complet (11a, 11b), qui relie une première borne de l'actionneur piézoélectrique (8) au choix à la première ou à la seconde de deux sorties de tension différentes (13', 14') de l'alimentation en tension (12') et l'autre borne de l'actionneur piézoélectrique à l'autre sortie de tension respective de l'alimentation en tension.

3. Dispositif selon la revendication 1 ou 2, **caractérisé en ce que** les moyens de charge et de décharge comportent des moyens de commande de courant (16) pour régler respectivement un courant de charge et/ou de décharge constant, la valeur constante de l'intensité du courant étant choisie égale à la valeur d'intensité maximale non commandée du courant de charge pour une valeur de tension piézoélectrique maximale désirée.

4. Dispositif selon l'une des revendications 1 à 3, **caractérisé en ce que** les moyens de charge et de décharge comportent des moyens de contrôle (17) pour contrôler la tension appliquée à l'actionneur piézoélectrique (8) et/ou la position zéro de l'actionneur piézoélectrique (8) et des moyens de réglage de temps, qui fixent les temps de commande pour les moyens de commutation commandés dans le temps, en fonction de l'information de contrôle des moyens de contrôle.

# Fig. 1

# Fig. 2

# Fig. 3

Fig. 4

Fig. 5

Fig. 6

# Fig. 7

# Fig. 8